# EUROPÄISCHE PATENTSCHRIFT

(11) **EP 2 211 153 B1**
(45) Veröffentlichungstag und Bekanntmachung des Hinweises auf die Patenterteilung: **09.05.2018**
(21) Anmeldenummer: 10000558.6
(22) Anmeldetag: 21.01.2010
(51) Int. Cl.: G01G 19/414, G07G 1/00

(54) **Ladenwaage**
Load scales
Balance de chargement

(30) Priorität: 22.01.2009 DE 102009005807
(43) Veröffentlichungstag der Anmeldung: 28.07.2010
(73) Patentinhaber: Bizerba SE & Co. KG, 72336 Balingen (DE)
(72) Erfinder: Hofmann, Bernd, 72461 Albstadt (DE); Laudien-Weidenfeller, Peter, 40489 Düsseldorf (DE)
(74) Vertreter: Huber, Meik

(56) Entgegenhaltungen:
- US-A- 4 656 344
- US-A- 5 177 345
- US-A1- 2002 079 168
- US-B1- 6 206 285
- US-B1- 6 241 149

## Beschreibung

Die Erfindung betrifft eine Ladenwaage nach den Merkmalen des Oberbegriffs des Anspruchs 1.

In der Praxis werden solche Ladenwaagen verwendet, um Lebensmittel wie Obst, Gemüse, Fleisch/Wurst oder Käse im Frischeverkauf an einer Verkaufstheke abzuwiegen und auszuzeichnen.

Aus der DE 43 19 299 C1 ist ein Kassenplatz für ein Ladengeschäft bekannt, der eine Wägevorrichtung aufweist. Die Wägevorrichtung ist als Baugruppe, bestehend aus einer Lastplatte und einem Barcodescanner gebildet und in einen Kassentisch eingelassen. Ein solcher Kassenplatz oder POS-Terminal (Point of Sale) wird verwendet um den einheitlichen Warenumschlag sowie den Gesamtpreis der von einem Kunden eingekauften Waren zu erfassen und zu kassieren. Solche POS-Terminals sind sehr aufwändig in der Herstellung und benötigen viel Platz.

Eine weitere Wägeeinrichtung als Baugruppe für ein POS-Terminal, bestehend aus einer Lastplatte mit einem Barcodescanner ist aus der EP 1 335 336 A2 bekannt.

Eine Ladenwaage mit einer Anzeigeeinrichtung ist aus der DE 102 42 147 A1 bekannt. Solche Ladenwaagen werden verwendet, um im Frischeverkauf Wurst oder Obst auf Kundenwunsch abzuwiegen und mit einem Preisetikett zu versehen. US 6 206 285 B1 offenbart ein Kassenterminal, US 6 241 149 B1 offenbart ein Check-out System, US 4 656 344 A offenbart eine Waage, US 2002/0079168 A1 offenbart ein Check-out Terminal, US 5 177 345 A offenbart einen Scanner. Der Erfindung liegt die Aufgabe zugrunde eine Ladenwaage zu schaffen, die universell einsetzbar ist und dabei wenig Bauraum benötigt. Vorzugsweise soll die Ladenwaage kostengünstig erweiterbar sein.

Diese Aufgabe wird erfindungsgemäß durch eine Ladenwaage mit den Merkmalen des Anspruchs 1 gelöst. Eine Verwendung der Ladenwaage ist Gegenstand des Anspruchs 11.

Vorteilhafte Weiterbildungen der Erfindung sind Gegenstand der abhängigen Ansprüche 2 bis 10. Die Ladenwaage weist ein Gehäuse auf, welches als Standgehäuse ausgebildet ist. Es weist eine Standbasis und eine mit der Standbasis verbundene Anzeigevorrichtung mit einem Display auf. In der Standbasis ist ein Sensormodul aufgenommen, welches eine Lastplatte, eine mit der Lastplatte verbundene Wägezelle und einen Barcodescanner aufweist. Der Barcodescanner kann zum Erfassen eindimensionaler Barcodes, also üblichen Strichcodes, oder mehrdimensionalen Barcodes ausgebildet sein. Vorzugsweise ist die Lastplatte zumindest abschnittsweise durchsichtig ausgebildet, so dass der Barcodescanner die Barcodes durch die Lastplatte hindurch erfassen kann. Das Sensormodul ist als einheitliche, insbesondere kompakte Baugruppe ausgebildet und kann als eigenständige Einheit einfach montiert, das heißt innerhalb der Standbasis befestigt oder getauscht werden. Dadurch ist ein besonders kostengünstiger und platzsparender Aufbau möglich. Dadurch ist es möglich, mit einer Ladenwaage nicht nur Frischeartikel zu verwiegen, sondern bereits abgepackte und mit einem Barcode versehene Artikel mitabzurechnen bzw. zu verkaufen, ohne dass dafür zusätzliche Geräte oder gar zusätzlicher Bauraum vonnöten ist.

In einer vorteilhaften Ausgestaltung ist ein modularer Aufbau der Ladenwaage vorgesehen, indem eine elektronische Steuerungsvorrichtung innerhalb des Gehäuses angeordnet ist, die eine oder mehrere Schnittstellen zum Anschließen unterschiedlicher Komponenten aufweist. So kann eine Schnittstelle zum Anschluss des Sensormoduls vorgesehen sein, die insbesondere dazu ausgebildet ist mehrere handelsübliche Sensormodule, wie sie 2. B. von den Firmen Datalogic® oder Metrologic® erhältlich sind, anzuschließen.

Es ist auch vorgesehen, die Anzeigevorrichtung über eine Schnittstelle an die elektronische Steuerungsvorrichtung anzuschließen, die ein oder mehr Displays aufweist. Von Vorteil ist, wenn zumindest eines der Displays als berührungsempfindlicher Bildschirm, insbesondere Touchscreen, ausgebildet ist. Insbesondere kann die Anzeigevorrichtung im Selbstbedienungsbetrieb (SB-Betrieb) der Ladenwaage mit lediglich einem Display ausgestattet sein. Wird die Ladenwaage im Bedienverkauf eingesetzt kann die Anzeigevorrichtung mit zwei Displays ausgestattet sein, wobei ein Display als Bedienerdisplay zum Bedienen der Waage und das andere Display als Kundendisplay zum Anzeigen von Informationen ausgebildet sein kann.

In einer Ausgestaltung ist vorgesehen, dass die elektronische Steuerungsvorrichtung über eine Schnittstelle einen oder mehrere Drucker ansteuert, wobei insbesondere ein Drucker als Etikettendrucker zum Drucken von Etiketten, vorzugsweise Selbstklebeetiketten zur Artikelauszeichnung, und ein weiterer Drucker als Bondrucker zum Drucken von Kassenbons ausgebildet ist. Somit kann die Waage zum Auszeichnen bzw. Etikettieren von Artikeln und zum Kassieren eingesetzt werden.

In einer Ausgestaltung ist vorgesehen, dass die elektronische Steuerungsvorrichtung zum Steuern des Kassiervorganges eines Endpreises ausgebildet ist. Hierfür kann die elektronische Steuerungsvorrichtung über eine Schnittstelle eine Kassenschublade für Bargeld und/oder einen Kartenleser für Kreditkarten und/oder EC-Karten und/oder Kundenkarten steuern. Das bietet den Vorteil, dass die Ladenwaage sowohl zum bargeldlosen Kassieren wie auch zum Kassieren von Bargeld einsetzbar ist.

Zum Erfassen des Endpreises werden alle Preisinformationen an der Ladenwaage erfasst. Dazu stellt die Ladenwaage eine einheitliche Bedienoberfläche bereit. Die Preise von Artikeln im Frischeverkauf werden anhand des Warengewichts über die Wägezelle erfasst. Preise bereits ausgezeichneter Artikel werden über den Barcodescanner erfasst. Alle Preise werden zu einem Endpreis addiert, den der Kunde zu bezahlen hat. Der Bezahlvorgang kann dann mit Bargeld über eine Kassenschublade oder bargeldlos über einen Kreditkartenleser erfolgen. Eine aufwändige Bedienung oder eine Umschaltung von den Betriebsmodi Wiegebetrieb oder Kassierbetrieb ist somit nicht notwendig. Der gesamte Bedienvorgang kann an einem einzigen Gerät abgewickelt werden. Für kleine Ladengeschäfte ist das eine kostengünstige und platzsparende Lösung.

Es ist vorgesehen, dass die elektronische Steuerungsvorrichtung die Preisinformationen in einem sicheren, nichtflüchtigen Protokollspeicher zur Datensicherung ablegt oder an einen Protokolldrucker übergibt, der die Daten zur Datensicherung nochmals ausdruckt.

In einer Ausgestaltung ist vorgesehen, dass die elektronische Steuerungsvorrichtung mit einer Warendatenbank verbunden ist oder eine Warendatenbank aufweist. Über die Warendatenbank kann die Waage Artikelinformationen wie Preise oder auch Bilder oder zusätzliche Informationen wie z.B. Inhaltsangaben, Herkunftsangaben zu einem bestimmten Artikel abrufen und auf der Anzeigevorrichtung anzeigen. Die Verknüpfung von der Artikelinformation und einem bestimmten Artikel erfolgt dabei über eine PLU Nummer oder EAN Nummer, die einen Artikel eindeutig kennzeichnet. Diese Nummer kann manuell eingegeben werden. Vorteilhafterweise wird die Nummer mit dem Barcodescanner gelesen, so dass die Artikelinformation automatisch von der elektronischen Steuerungsvorrichtung aus der Warendatenbank abgerufen und angezeigt werden kann ohne dass der Kunde oder der Bediener umständlich die PLU Nummer oder EAN Nummer eingeben muss.

Es ist vorgesehen, dass das Gehäuse mechanisch so aufgebaut ist, dass an das Gehäuse ein oder zwei Displays anschließbar sind, indem das Gehäuse Aufnahmen und/oder Halterungen für ein oder zwei Displays aufweist, die bei Nichtgebrauch z. B. hinter einer Blende verdeckt werden. Es kann auch vorgesehen sein, in dem Gehäuse der Ladenwaage ein oder zwei Drucker zu integrieren, indem das Gehäuse entsprechende Einbauplätze für zwei Drucker aufweist.

Es ist vorgesehen, dass die elektronische Steuerungsvorrichtung innerhalb des Gehäuses aufgenommen ist, vorzugsweise im Bereich des Displays oder eines Stativs, welches die Anzeigevorrichtung mit der Standbasis verbindet, angeordnet ist. Die elektronische Steuerungsvorrichtung ist als kompakte Schaltung mit einem Mikroprozessor und elektrisch beschreibbarem Speicher ausgebildet, vorzugsweise als ein CPU-Board.

Eine Verwendung der Ladenwaage ist beispielsweise in einem Lebensmittelgeschäft vorgesehen. Die Ladenwaage kann hier als Thekenwaage einer kleinen Filiale oder als POS-System, also als Kassenterminal eingesetzt werden.

Weitere Ausführungsbeispiele der Erfindung sind in den Figuren dargestellt und der dazugehörenden Beschreibung beschrieben.

Es zeigen,
- Figur 1:: Eine erfindungsgemäße Ladenwaage
- Figur 2:: Ein Blockdiagramm der Ladenwaage

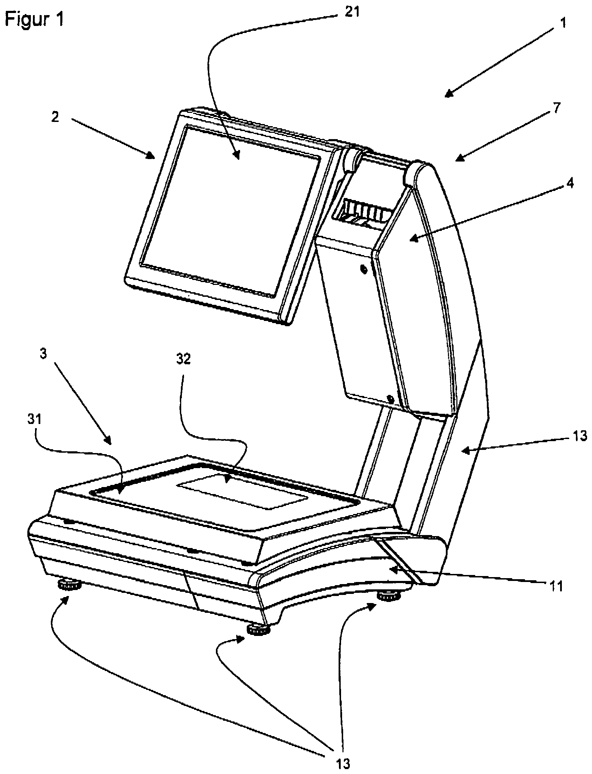

Die Figur 1 zeigt eine Ladenwaage 1. Diese weist ein Gehäuse 7 mit einer Standbasis 11 auf. Die Standbasis 11 bildet das untere Teil des Gehäuses. Die Standbasis weist an ihrer Oberseite eine Lastplatte 31 auf und umfasst einen unterhalb der Lastplatte angeordneten Bauraum zur Aufnahme von Komponenten. In der Standbasis 11 ist in dem Bauraum ein Sensormodul 3 aufgenommen. Es weist eine mit einer Last- bzw. Wägeplatte 31 verbundene Wägezelle 33 zum Erfassen des Gewichts von auf die Lastplatte 31 aufgelegtem Wägegut und einen Barcodescanner 32 auf. Die Lastplatte 31 weist ein Sichtfenster auf, das heißt die Oberfläche ist teilweise durchsichtig gestaltet, so dass der Barcodescanner 32 durch dieses Sichtfenster hindurch Barcodes des Wägeguts bzw. der zu wiegenden Artikel erfassen kann.

Das Sensormodul 3 ist als eigenständige, insbesondere separate Baugruppe bzw. Modul ausgebildet und kann als solches auf einfache Art und Weise montiert bzw. demontiert werden. Das Gehäuse 7 ist an seiner Unterseite über Füße 13 auf einer ebenen Fläche, z. B. einer Verkaufstheke, abstellbar. Die Füße 13 sind mit der Standbasis 11 verbunden und in der Höhe verstellbar, um zu gewährleisten, dass die Waage 11 auch bei unebenem Untergrund immer genau horizontal ausgerichtet ist.

Das Gehäuse 7 weist ein Stativ 13 auf, welches einerseits mit der Standbasis 11 und andererseits mit einer Anzeigevorrichtung 2 verbunden ist. Das Stativ 13 weist einen in das Stativ 13 integrierten Drucker 4 zum Drucken von Etiketten auf.

Die Anzeigevorrichtung 2 ist mit einem Touch-Screen 21 zur Bedienung der Ladenwaage 1 ausgestattet. Der Touch-Screen 21 dient sowohl zur Anzeige als auch zur Eingabe von Daten und/oder Informationen.

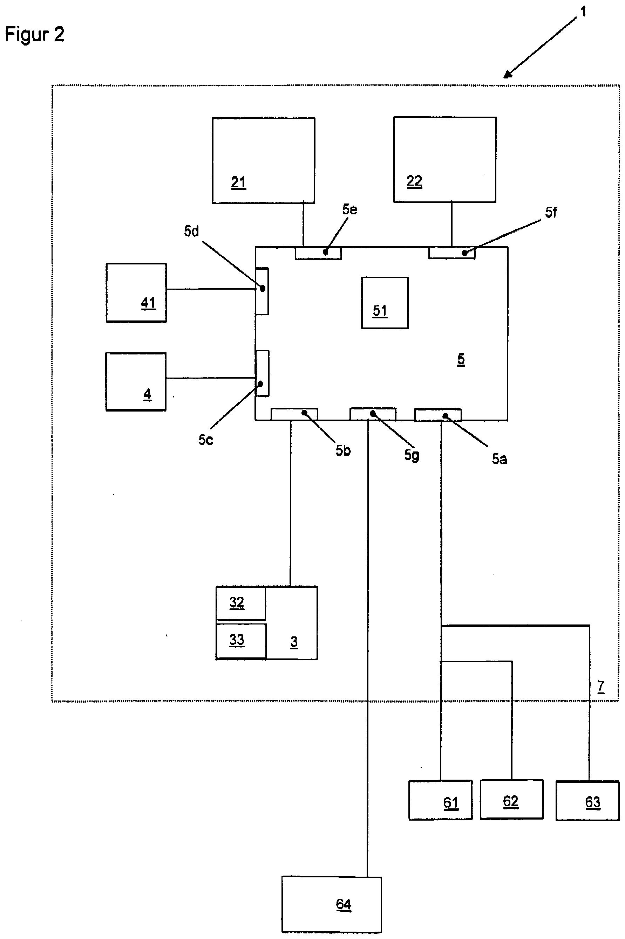

In der Figur 2 ist der schematische Aufbau der Ladenwaage 1 gezeigt. Eine Steuerungsvorrichtung 5 ist innerhalb des Gehäuses 7 angeordnet und dient der Steuerung der Anzeigevorrichtung und des Druckers 4. Die Schnittstelle 5 weist dabei ein CPU Board auf, mit dem die Anzeigevorrichtung 2 gesteuert und eine Bedienoberfläche bereitgestellt wird. Über Schnittstellen 5a, b, c, d, e, f, g können an die Steuerungsvorrichtung 5 mehrere Komponenten angeschlossen werden. Dabei können einzelne Komponenten innerhalb des Gehäuses 7, welches durch einen gestrichelten Kasten angedeutet ist, angeordnet sein oder außerhalb des Gehäuses 7. Die Verbindung der Schnittstellen mit den Komponenten ist durch Verbindungslinien angedeutet.

So ist das Sensormodul mit Barcodescanner 32 und Wägezelle 33 über eine Schnittstelle 5b elektronisch an die Steuerungsvorrichtung 5 angeschlossen. Dadurch kann das Sensormodul einfach installiert bzw. getauscht werden. Über weitere Schnittstellen 5c und 5d können an die elektrische Steuerungsvorrichtung 5 ein Etikettendrucker und ein Bondrucker angeschlossen werden. Über weitere Schnittstellen 5e und 5f können Bildschirme wie ein Touch-Screen 21 und ein LCD-Display 22 an die Steuerungsvorrichtung 5 angeschlossen werden. Es müssen nicht alle Schnittstellen belegt sein. So kann z. B. in einer einfachen Ausbaustufe der Ladenwaage lediglich ein einziger.Drucker installiert und ein Display sein.

Über weitere Schnittstellen 5a und 5g können externe Komponenten, also außerhalb des Gehäuses 7 der Ladenwaage 1 angeordnete Komponenten, angeschlossen werden. So ist vorgesehen, dass über eine Schnittstelle 5g eine Warendatenbank 64 mit Artikelinformationen wie Preisinformationen und Inhaltsstoffen oder Herkunftsangaben zu einzelnen Artikeln mit der Steuerungsvorrichtung verbunden ist. Wird eine Artikelnummer mit dem Barcodescanner gelesen, werden zu dem Artikel gehörende Artikelinformationen wie z. B. Inhaltsangaben automatisch von der elektronischen Steuerungsvorrichtung 5 aus der Warendatenbank abgerufen und auf der Anzeigevorrichtung 2 angezeigt. Über eine von der Steuerungsvorrichtung 5 generierte Bedienoberfläche können solche Artikelinformationen zum Druck freigegeben werden. Ein Kunde kann somit auf Wunsch Zusatzinformationen zu einem Artikel wie z. B. eine Liste mit Inhaltsstoffen oder Herkunftsangaben oder Rezeptvorschläge erhalten.

Des Weiteren kann ein Handscanner 61 zum Erfassen von Barcodes bei sperrigen Artikeln, ein Kartenleser 62 und eine Kassenschublade 63 für Bargeld über eine Schnittstelle 5a von der Steuerungsvorrichtung 5 angesteuert werden. So ist es möglich, mit einer einheitlichen Bedienoberfläche an der Ladenwaage den Gesamtpreis aller von einem Kunden einkauften Waren zu erfassen und auch den Gesamtpreis abzukassieren. Eine Umschaltung von einzelnen Betriebsmodi kann entfallen.

Bei den Schnittstellen 5a, b, c, d, e, f, g handelt es sich um genormte Schnittstellen wie z. B. um serielle USB Schnittstellen.

Die Steuerungsvorrichtung 5 weist einen gesicherten Datenspeicher 51 auf, in dem Abrechnungsdaten, wie z. B. Bondaten über Verkäufe protokolliert werden können. Es ist vorgesehen, dass solche Daten parallel auf einen Kassenbon gedruckt und in dem Speicher 51 als Kopie abgelegt werden. Es handelt sich um einen nicht flüchtigen Speicher 51, der gegen Datenmanipulationen gesichert ist.

## Patentansprüche

1. Ladenwaage zum Wiegen von Lebensmitteln beim Bedienverkauf mit einem Gehäuse (7) zum Aufstellen auf einer Verkaufstheke, wobei das Gehäuse eine Standbasis (11) und eine mit der Standbasis verbundene Anzeigevorrichtung (2) zum Anzeigen von Informationen aufweist
**dadurch gekennzeichnet,**
**dass** die Standbasis (11) einen Bauraum aufweist, in dem ein Sensormodul (3) aufgenommen ist welches als eine einheitliche Baugruppe ausgebildet ist, und
**dass** das Sensormodul (3) zumindest eine abschnittsweise durchsichtige Lastplatte (31) und eine mit der Lastplatte (31) verbundene Wägezelle (33) zur Gewichtsmessung umfasst, und
**dass** das Sensormodul (3) einen Scanner (32) auf einer Seite eines durchsichtigen Abschnitts der abschnittsweise durchsichtigen Lastplatte (31) umfasst,
und
**dass** der Scanner (32) zum Erfassen von Barcodes ausgestaltet ist, wobei die Barcodes auf Artikeln auf der anderen Seite des durchsichtigen Abschnitts der abschnittsweise durchsichtigen Lastplatte (31) angeordnet sind, und
**dass** das Sensormodul (3) als modulare Baugruppe austauschbar ist, und
**dass** die Anzeigevorrichtung (2) ein erstes berührungsempfindliches Display (21) zum Anzeigen und Bedienen der Ladenwaage haltert, das einer ersten Seite zugewandt ist, und
**dass** die Anzeigevorrichtung (2) ein zweites Display (22) zum Anzeigen von Informationen haltert, das der ersten Seite abgewandt ist.

2. Ladenwaage nach Anspruch 1,
**dadurch gekennzeichnet,**
**dass** innerhalb des Gehäuses (7) eine elektronische Steuerungsvorrichtung (5) angeordnet ist, die einen modularen Ausbau ermöglicht indem die elektronische Steuerungseinrichtung eine oder mehrere elektronische Schnittstellen (5a, b, c, d, e, f) zum Anschluss des Sensormoduls (3), der Anzeigevorrichtung (2) mit dem ersten berührungsempfindlichen Display (21) und dem zweiten Display (22), und wenigstens eines Druckers (4) aufweist.

3. Ladenwaage nach einem der Ansprüche 1 bis 2,
**dadurch gekennzeichnet,**
**dass** das Gehäuse (7) einen modularen Aufbau aufweist, indem es mechanische Schnittstellen zum Haltern und/oder Einbauen von zwei Displays (21, 22) sowie einem oder mehreren Druckern (4, 41) aufweist.

4. Ladenwaage nach einem der vorhergehenden Ansprüche,
**dadurch gekennzeichnet,**
**dass** das Gehäuse (7) einen modularen Aufbau aufweist, indem die Standbasis (11) einen Einbauschacht aufweist, der das Sensormodul (3) austauschbar haltert und auf die Abmessungen handelsüblicher Sensormodule abgestimmt ist.

5. Ladenwaage nach Anspruch 2 oder 3,
**dadurch gekennzeichnet,**
**dass** die elektronische Steuerungsvorrichtung (5) einen Etikettendrucker (4) zum Drucken von Etiketten und einen Bondrucker (41) zum Drucken von Kassenbons ansteuert und die von dem Bondrucker gedruckten Daten in einem Protokollspeicher (51) abspeichert oder an einen Protokolldrucker sendet.

6. Ladenwaage nach einem der vorhergehenden Ansprüche,
**dadurch gekennzeichnet,**
**dass** die elektronische Steuerungsvorrichtung (5) eine Schnittstelle (5a) zum Anschluss eines Kartenlesers (62), vorzugsweise eines Magnetkartenlesers und/oder Kredit-Kartenlesers und/oder Kundenkartenlesers aufweist.

7. Ladenwaage nach einem der vorhergehenden Ansprüche, **dadurch gekennzeichnet,**
**dass** die elektronische Steuerungsvorrichtung (5) eine Schnittstelle (5a) zum Anschluss eines Handscanners (61) aufweist, der zum Lesen von Barcodes an sperrigen Waren verwendbar ist.

8. Ladenwaage nach einem der vorhergehenden Ansprüche,
**dadurch gekennzeichnet,**
**dass** die elektronische Steuerungsvorrichtung (5) eine Schnittstelle (5a) zum Anschluss und/oder Steuern einer Kassenschublade (63) aufweist.

9. Ladenwaage nach einem der vorhergehenden Ansprüche,
**dadurch gekennzeichnet,**
**dass** das berührungsempfindliche Display (21) der Anzeigevorrichtung (2) eine Bedienoberfläche aufweist, die das Ermitteln von gewichtsabhängigen Preisen über die Wägezelle (33) und das Erfassen von artikelabhängigen Preisen über den Scanner (32) ermöglicht.

10. Ladenwaage nach einem der vorhergehenden Ansprüche,
**dadurch gekennzeichnet,**
**dass** die elektronische Steuerungsvorrichtung (5) über eine Schnittstelle (5g) an eine Datenbank (64) mit Artikelinformationen angeschlossen ist oder eine solche Datenbank aufweist und einen Betriebsmodus aufweist, der beim Erfassen eines Artikels über den Scanner (32) die zugehörige Artikelinformation aus der Datenbank (64) abruft und auf der Anzeigevorrichtung (2) automatisch anzeigt.

11. Verwendung einer Ladenwaage nach einem der vorhergehenden Ansprüche zum Auszeichnen von Artikeln, wobei vorgesehen ist,
dass über einen Etikettendrucker Etiketten, vorzugsweise Selbstklebeetiketten, zum Auszeichnen von Artikeln mit Artikelinformationen und/oder Preisinformationen und/oder Barcodes bedruckt werden.

## Claims

1. Retail scales for weighing food in the case of serviced sales, having a housing (7) for placement on a sales counter, the housing having a stand base (11) and a display apparatus (2) which is connected to the stand base and is intended to display information,
**characterized**
**in that** the stand base (11) has an installation space which accommodates a sensor module (3) in the form of a unified assembly, and
**in that** the sensor module (3) comprises at least one load plate (31) which is transparent in certain sections and a load cell (33) which is connected to the load plate (31) and is intended to measure the weight, and
**in that** the sensor module (3) comprises a scanner (32) on one side of a transparent section of the load plate (31) which is transparent in certain sections, and
**in that** the scanner (32) is configured to capture barcodes, the barcodes being arranged on articles on the other side of the transparent section of the load plate (31) which is transparent in certain sections, and
**in that** the sensor module (3) can be replaced as a modular assembly, and
**in that** the display apparatus (2) holds a first touch-sensitive display (21) for displaying and operating the retail scales, which first display faces a first side, and
**in that** the display apparatus (2) holds a second display (22) for displaying information, which second display faces away from the first side.

2. Retail scales according to Claim 1,
**characterized**
**in that** an electronic control apparatus (5) is arranged inside the housing (7) and enables modular expansion by virtue of the electronic control device having one or more electronic interfaces (5a, b, c, d, e, f) for connecting the sensor module (3), the display apparatus (2) having the first touch-sensitive display (21) and the second display (22), and at least one printer (4).

3. Retail scales according to one of Claims 1 to 2,
**characterized**
**in that** the housing (7) has a modular structure by virtue of it having mechanical interfaces for holding and/or installing two displays (21, 22) and one or more printers (4, 41).

4. Retail scales according to one of the preceding claims,
**characterized**
**in that** the housing (7) has a modular structure by virtue of the stand base (11) having an installation shaft which holds the sensor module (3) in a replaceable manner and is matched to the dimensions of commercially available sensor modules.

5. Retail scales according to Claim 2 or 3,
**characterized**
**in that** the electronic control apparatus (5) controls a label printer (4) for printing labels and a receipt printer (41) for printing till receipts and stores the data printed by the receipt printer in a log memory (51) or transmits said data to a log printer.

6. Retail scales according to one of the preceding claims,
**characterized**
**in that** the electronic control apparatus (5) has an interface (5a) for connecting a card reader (62), preferably a magnetic card reader and/or a credit card reader and/or a customer card reader.

7. Retail scales according to one of the preceding claims,
**characterized**
**in that** the electronic control apparatus (5) has an interface (5a) for connecting a handheld scanner (61) which can be used to read barcodes on bulky goods.

8. Retail scales according to one of the preceding claims,
**characterized**
**in that** the electronic control apparatus (5) has an interface (5a) for connecting and/or controlling a cash drawer (63).

9. Retail scales according to one of the preceding claims,
**characterized**
**in that** the touch-sensitive display (21) of the display apparatus (2) has a user interface which makes it possible to determine weight-dependent prices using the load cell (33) and to capture article-dependent prices using the scanner (32).

10. Retail scales according to one of the preceding claims,
**characterized**
**in that** the electronic control apparatus (5) is connected to a database (64) containing article information via an interface (5g) or has such a database and has an operating mode which, when capturing an article using the scanner (32), retrieves the associated article information from the database (64) and automatically displays it on the display apparatus (2).

11. Use of retail scales according to one of the preceding claims to label articles, wherein provision is made for labels, preferably self-adhesive labels, for labelling articles to be printed with article information and/or price information and/or barcodes via a label printer.

## Revendications

1. Balance de comptoir destinée à peser des denrées alimentaires dans un service de vente, comportant un boîtier (7) destiné à être mis en place sur un comptoir de vente, dans lequel le boîtier comporte un socle de support (11) et un dispositif d'affichage (2) relié au socle de support pour afficher des informations, **caractérisée en ce que** le socle de support (11) comporte un espace de montage dans lequel est logé un module capteur (3) et qui est réalisé sous la forme d'un ensemble en une seule pièce, et **en ce que** le module capteur (3) comprend au moins une plaque de charge (31) transparente au moins par sections et une cellule de pesage (33) reliée à la plaque de charge (31) pour la mesure de poids, et
**en ce que** le module capteur (3) comprend un scanneur (32) sur un côté d'une section transparente de la plaque de charge (31) transparente par sections, et
**en ce que** le scanneur (32) est conçu pour détecter des codes à barres, dans lequel les codes à barres sont disposés sur des articles de l'autre côté de la section transparente de la plaque de charge (31) transparente par sections, et
**en ce que** le module capteur (3) est remplaçable sous la forme d'un composant modulaire, et
**en ce que** le dispositif d'affichage (2) supporte un premier afficheur tactile (21) destiné à afficher et à commander la balance de comptoir, lequel afficheur est tourné vers un premier côté, et
**en ce que** le dispositif d'affichage (2) supporte un second afficheur tactile (22) destiné à afficher des informations, lequel afficheur est tourné en direction opposée au premier côté.

2. Balance de comptoir selon la revendication 1,
**caractérisée en ce qu'**à l'intérieur du boîtier (7), il est prévu un dispositif de commande électronique (5) qui permet une réalisation modulaire en faisant en sorte que le dispositif de commande électronique comporte une ou plusieurs interfaces électroniques (5a, b, c, d, e, f) destinées à raccorder le module capteur (3) et le dispositif d'affichage (2) au premier afficheur tactile (21) et au second afficheur (22), et au moins une imprimante (4).

3. Balance de comptoir selon l'une des revendications 1 et 2,
**caractérisée en ce que** boîtier (7) présente une structure modulaire par le fait qu'il comporte des interfaces mécaniques destinées à supporter et/ou à intégrer deux afficheurs (21, 22) et une ou plusieurs imprimantes (4, 41).

4. Balance de comptoir selon l'une quelconque des revendications précédentes,
**caractérisée en ce que** le boîtier (7) présente une structure modulaire par le fait que le socle de support (11) comporte une baie qui supporte de manière remplaçable le module capteur (3) et qu'il est adapté aux dimensions de modules capteurs du commerce.

5. Balance de comptoir selon la revendication 2 ou 3,
**caractérisée en ce que** le dispositif de commande électronique (5) commande une imprimante à étiquettes (4) destinée à imprimer des étiquettes et une imprimante à reçus (41) destinée à imprimer des reçus de caisse et stocke les données imprimées par l'imprimante à reçus dans une mémoire de journal (51) ou les envoie à une imprimante de journal.

6. Balance de comptoir selon l'une quelconque des revendications précédentes,
**caractérisée en ce que** le dispositif de commande électronique (5) comporte une interface (5a) destinée au raccordement d'un lecteur de carte (62), de préférence un lecteur de carte magnétique et/ou un lecteur de carte de crédit et/ou un lecteur de carte de client.

7. Balance de comptoir selon l'une quelconque des revendications précédentes,
**caractérisée en ce que** le dispositif de commande électronique (5) comporte une interface (5a) destinée au raccordement d'un scanneur portatif (61) qui peut être utilisé pour lire des codes à barres présents sur des marchandises volumineuses.

8. Balance de comptoir selon l'une quelconque des revendications précédentes,
**caractérisée en ce que** le dispositif de commande électronique (5) comporte une interface (5a) destinée au raccordement et/ou à la commande d'un tiroir-caisse (63).

9. Balance de comptoir selon l'une quelconque des revendications précédentes,
**caractérisée en ce que** l'afficheur tactile (21) du dispositif d'affichage (2) comporte une surface de commande qui permet de déterminer des prix dépendant du poids par l'intermédiaire de la cellule de pesage (33) et de détecter des prix dépendant des articles par l'intermédiaire du scanneur (32).

10. Balance de comptoir selon l'une quelconque des revendications précédentes,
**caractérisée en ce que** le dispositif de commande électronique (5) est raccordé par l'intermédiaire d'une interface (5g) à une base de données (64) contenant des informations concernant les articles ou à une base de données de ce type et présente un mode de fonctionnement qui recherche les informations d'articles associées lors de la détection d'un article par l'intermédiaire du scanneur (32) dans la base de données (64) et les affiche automatiquement sur le dispositif d'affichage (2).

11. Utilisation d'une balance de comptoir selon l'une quelconque des revendications précédentes pour distinguer des articles, dans laquelle il est fait en sorte que des étiquettes, de préférence des étiquettes autocollantes, soient imprimées avec des informations concernant les articles et/ou des informations concernant les prix et/ou des codes à barres au moyen d'une imprimante à étiquettes.
